(19) Europäisches Patentamt
European Patent Office
Office européen des brevets

(11) **EP 2 025 900 B1**

(12) **EUROPEAN PATENT SPECIFICATION**

(45) Date of publication and mention
of the grant of the patent:
**23.06.2010 Bulletin 2010/25**

(51) Int Cl.:
*F02C 9/00* *(2006.01)*   *F02C 9/28* *(2006.01)*

(21) Application number: **07425532.4**

(22) Date of filing: **14.08.2007**

(54) **Device and method for controlling a gas-turbine plant**

Vorrichtung und Verfahren zur Steuerung einer Gasturbinenanlage

Dispositif et procédé pour le contrôle d'une centrale à turbine à gaz

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**18.02.2009 Bulletin 2009/08**

(73) Proprietor: **ANSALDO ENERGIA S.P.A.**
**16152 Genova (IT)**

(72) Inventors:
• **Lombardi, Filippo**
**16026 Montoggio (IT)**

• **Cacciacarne, Stefano**
**16148 Genova (IT)**

(74) Representative: **Bergadano, Mirko et al**
**Studio Torta S.r.l.**
**Via Viotti, 9**
**10121 Torino (IT)**

(56) References cited:
**EP-A- 1 420 153    EP-A- 1 679 563**
**GB-A- 2 345 343    US-A- 5 857 321**

**EP 2 025 900 B1**

**Description**

The present invention relates to a device and to a method for controlling a gas-turbine plant.

As is known, systems for regulating gas-turbine plants are principally designed for regulating the electrical power supplied, the speed of rotation of the turbine, and the temperature of the exhaust gases. Regulation of the electrical power supplied and of the speed of rotation are entrusted to two distinct regulators, which can be activated alternatively and never act simultaneously. In particular, a first regulator is designed for regulation of the electrical power supplied when the plant is connected to a distribution network or in any case to power-using devices, whereas a second regulator operates for regulating the rotation speed, when the plant is detached from the network (for example, at starting or else in the case of temporary detachment owing to failures). A third regulator is dedicated to regulation of the exhaust gas temperature.

Regulation has the purpose, on the one hand, of bringing the plant into compliance with the requirements necessary to guarantee proper operation of electrical power distribution networks or the power-using devices and, on the other, of preventing the plant from having to operate in critical conditions. For example, to meet a sudden demand of load by the network, the power regulator might react and bring the plant into an unsafe operating condition, capable of causing excessively high temperatures in the combustion chamber of the turbine. In this situation, the temperature regulator detects a rise of the exhaust gas temperature with respect to a fixed working point, to which there corresponds a rise in the temperature in the combustion chamber, and consequently intervenes to prevent the variations from exceeding the limits of safety.

A limit of the known regulation systems resides in that current technologies do not enable to place temperature transducers inside the combustion chamber. Consequently, temperature regulation is made by measuring the temperature of the exhaust gases using thermocouples. The response of the thermocouples, however, is rather slow and does not enable detection of short-duration temperature transients of particularly large amplitude (i.e., spikes) that may occur in the combustion chamber. Even though for very short intervals of time, in cases of this sort the operating conditions within the combustion chamber may become critical and cause even irreparable damage. On account of the slow response of the thermocouples, moreover, the temperature regulator inevitably intervenes with a considerable delay even when the temperature variations are not completely masked. Consequently, the plant may in any case be subject to critical working conditions for a certain period, before the action of the regulator manages to restore safety conditions.

US-A-5 857 321 discloses a gas turbine control system that includes a controller, coupled to actuators to govern operation of the gas turbine, whereby internal quantities of the gas turbine are limited. A neural network estimator is coupled to transducers for receiving measured quantities and is trained to generate estimated quantities indicative of measurable quantities that are non-dynamically correlated to the internal quantities of the gas turbine

Another example of a control system for a gas turbine is disclosed in EP-A-1 420 153.

The purpose of the present invention is hence to provide a device for controlling a gas-turbine plant that will enable the limitations described above to be overcome.

According to the present invention. a device for controlling a gas-turbine plant is provided, as defined in Claim 1.

The present invention will now be described with reference to the annexed drawings, which illustrate some non-limiting embodiment thereof, in which:

- Figure 1 is a simplified block diagram of a gas-turbine plant including a control device according to an embodiment of the present invention; and
- Figure 2 is a more detailed block diagram of the plant of Figure 1.

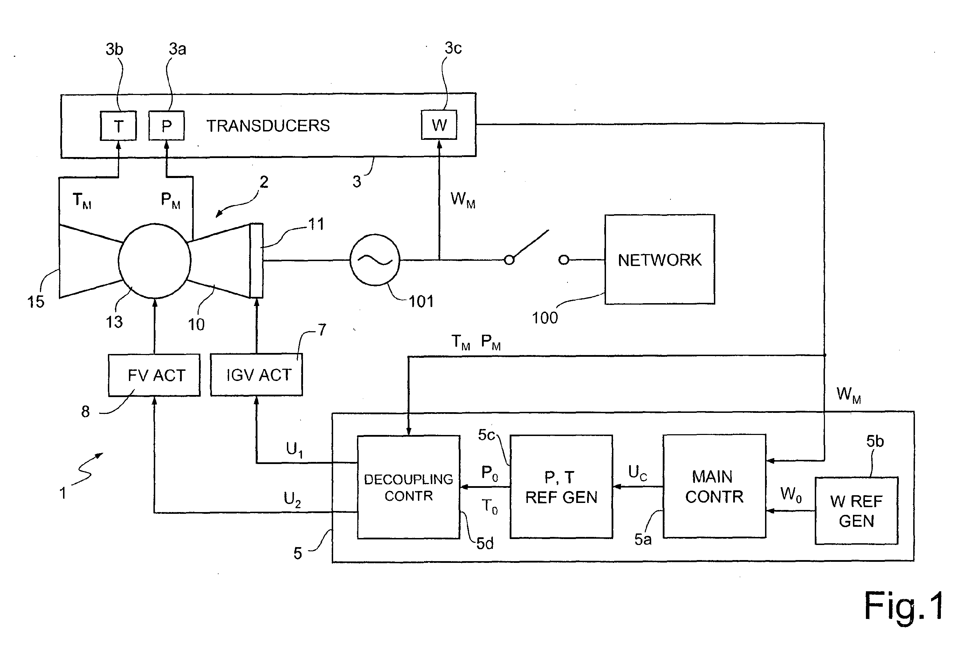

Figure 1 illustrates a gas-turbine plant 1, in the case in point a plant for the production of electrical energy. The plant 1 is selectively connectable to a known distribution network 100 and comprises a turbogas unit 2, transducers 3, a control device 5, and a first actuator 7 and second actuator 8. The plant 1 moreover comprises an alternator 101, which is also of a known type, which is mechanically connected to the turbogas unit 2 and actuated thereby.

The turbogas unit 2 is of a conventional type and comprises a compressor 10, equipped with an input stage with variable geometry or IGV (Inlet Guide Vane) stage 11, a combustion chamber 13, and a gas turbine 15. In particular the input stage 11 of the compressor 10 is provided with a plurality of vanes (not illustrated), the inclination of which can be modified by means of the first actuator 7 for regulating the flow rate of air drawn in by the compressor 10 itself. The combustion chamber 13 receives the fuel through a supply valve, which is of a known type and is not illustrated, actuated by the second actuator 8.

The transducers 3 include at least one pressure transducer 3a, located at the output from the compressor 10, and a temperature transducer 3b, arranged at the exhaust of the turbine 15. The pressure transducer 3a supplies to the control device 5 a measured pressure $P_M$, indicating a compressor pressure $P_C$ at the output from the compressor 10. The temperature transducer 3b supplies a measured temperature $T_M$ indicating an exhaust temperature $T_{EX}$ of the exhaust gases at output from the turbine 15. The power transducers 3c supply a measured power $W_M$ indicating the instantaneous electrical power produced by the plant 1.

The control device 5 uses the measured pressure $P_M$, the measured temperature $T_M$, and the measured power $W_M$ for generating a first control signal $U_1$ and a second control signal $U_2$, which are supplied to the first actuator 7 and to the second actuator 8, respectively, in order to control operation of the plant 1. The control device 5 is built so as to satisfy requests coming from the distribution network connected to the plant 1, ensuring that state variables of the plant 1 itself remain within safety limits. In particular, the state variables concerned, on which the control device 5 is based, are the pressure in combustion chamber P and the temperature in combustion chamber T. To carry out these tasks, the control device 5 comprises a main control module 5a, a first reference generator module 5b, which supplies a reference power value $W_0$, a second reference generator module 5c, and a decoupling control module 5d. The main control module 5a calculates a power error on the basis of the difference between the measured power $W_M$ and the reference power value $W_0$ and determines an action of control for minimizing the power error. The second reference generator module 5c determines a reference pressure value $P_0$, and a reference temperature value To for actuating the action of control in accordance with the requests of the main control module 5a. Finally, the decoupling control module 5d generates the first actuation signal $U_1$ and the second actuation signal $U_2$, as described hereinafter.

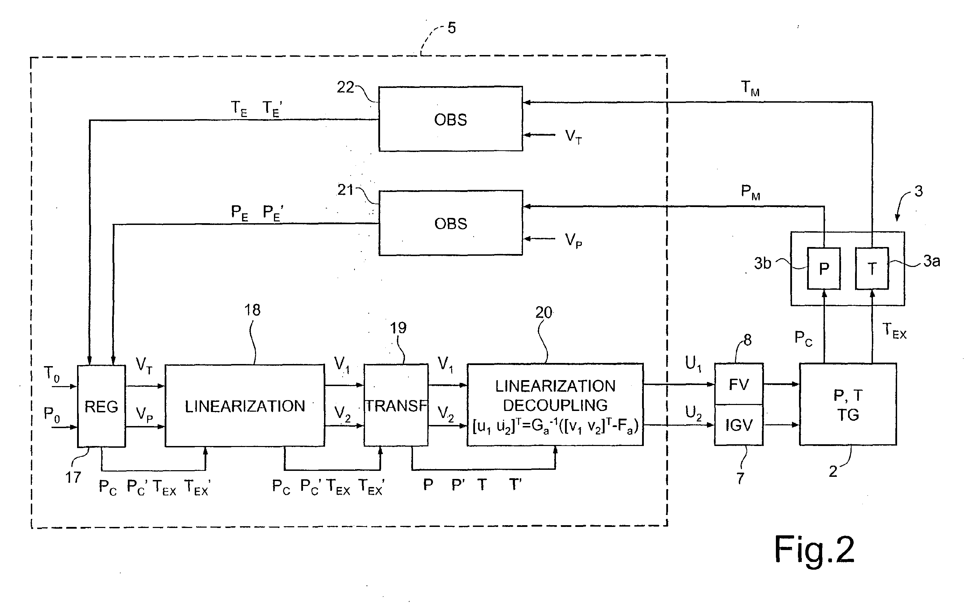

With reference to Figure 2, the decoupling control module 5d comprises a regulator module 17, a linearizer module 18, a transformation module 19, a linearizer-decoupler module 20, a first observer module 21 and a second observer module 22, which are connected to one another so as to form a control loop for regulating the pressure and a control loop for regulating the temperature of the fluid evolving in the plant 1.

In detail, the regulator module 17 generates a pressure control signal $V_P$ and a temperature control signal $V_T$ on the basis of the reference pressure value $P_0$, the reference temperature value To, and quantities supplied by the first observer module 21 and by the second observer module 22. In particular, the first observer module 21 supplies a pressure estimate $P_E$ and a pressure derivative estimate $P_E'$, whereas the second observer module 22 supplies a temperature estimate $T_E$ and a temperature derivative estimate $T_E'$. As explained further hereinafter, the pressure estimate $P_E$ and the pressure derivative estimate $P_E'$ relate to the compressor pressure $P_C$ (and its derivative) at output from the compressor 13, and the temperature estimate $T_E$ and the temperature derivative estimate $T_E'$ relate to the temperature of the exhaust gases at output from the turbine 15 (and its derivative). In practice, the estimates supplied by the first observer module 21 and by the second observer module 22 are estimates of the quantities that are respectively measured by the pressure transducer 3a and by the temperature transducer 3b, but are not affected by the dynamics of the latter.

As will be clarified further hereinafter, the system formed by the turbogas unit 2, the transducers 3, the control device 5, and the actuators 7, 8 is linearized and decoupled, in particular as a result of the linearizer-decoupler module 20. In practice, it is possible to envisage two distinct control loops, each based upon a dynamic system of the second order, one for pressure and one for temperature. The pressure control signal $V_P$ and the temperature control signal $V_T$ may consequently be used for separately controlling pressure and temperature of the fluid evolving in the plant 1 (in particular, in the combustion chamber 13). In other words, the pressure control signal $V_P$ substantially produces only pressure variations, whereas the temperature control signal $V_T$ substantially produces only temperature variations. The pressure control signal $V_P$ and the temperature control signal $V_T$ are moreover supplied to the first observer module 21 and to the second observer module 22, respectively, for carrying out the operations of estimation. As a whole, the robustness of the control is the greater, the higher the degree of decoupling obtainable by the linearizer-decoupler module 20.

Possibly, the regulator module 17 carries out a transformation of the reference pressure value $P_0$ and of the reference temperature value To. Said transformation is required when the reference values are expressed in terms of measured quantities and must be rendered homogeneous to the quantities supplied by the observer modules 21, 22 (for example, the reference values may express the values that it is desired to read at output from the transducers 3a, 3b, whilst the estimates supplied by the observer modules 21, 22 refer to the effective values of the quantities that are measured).

In the embodiment described herein, the regulator module 17 is implemented by means of regulators of a PID type.

The linearizer module 18 linearizes the relation between the estimates supplied by the first observer module 21 and by the second observer module 22 and the corresponding quantities within the combustion chamber 13. The linearizer module 18 is configured for carrying out a feedback linearization and, in practice, operates a transformation of the pressure control signal $V_P$ and of the temperature control signal $V_T$ and generates a first linearizing control signal $V_1$ and a second linearizing control signal $V_2$ so as to impose a linear pattern, eliminating the non-linearity due in particular to the location of the temperature transducer at the exhaust of the turbine 15.

The transformation block 19, which leaves the first linearizing control signal $V_1$ and the second linearizing control signal $V_2$ unchanged, and determines the pressure in combustion chamber P, the derivative of the pressure in combustion chamber P', the temperature in combustion chamber T, and the derivative of the temperature in combustion chamber T' starting from the quantities estimated by the first observer module 21 and by the second observer module 22 ($P_E$, $P_E'$, $T_E$, $T_E'$). The link between the real quantities (compressor pressure $P_C$ and its derivative $P_C'$, exhaust temperature $T_{EX}$ and its derivative $T_{EX}$'), of which the observer modules 20, 21 supply estimates, and the corresponding quantities in the combustion chamber determined by the transformation module 19 is of a non-dynamic type, for example algebraic or transcendental. In particular, here and in what follows it is intended to indicate thereby that any possible dynamics in the transformation have no effect for the purposes of controlling the plant 1 and can consequently be neglected. For example, the time of transit of the exhaust gases in the turbine 15 is of the order of thousandths or hundredths of a second, and the variations of the exhaust temperature $T_{EX}$ follow in effect the variations of the temperature T in the combustion chamber with a delay comparable to the time of transit. However, the characteristic time constants of the thermodynamic cycle of the plant 1 and of the temperature transducer 3b are much greater. The rapid dynamics like those indicated above are hence normally neglected in the framework of control of gas-turbine plants, and the corresponding relations are considered purely algebraic or transcendental. In practice, then, the pressure in combustion chamber P and the temperature in combustion chamber T are functions that depend, respectively, upon only the compressor pressure $P_C$ and only the exhaust temperature $T_{EX}$.

The linearizer-decoupler module 20 makes a further transformation of the first linearizing control signal $V_1$ and of the second linearizing control signal $V_2$ so as to decouple regulation of pressure and temperature in the plant 1. In particular, the linearizer-decoupler module 20 determines the first actuation signal $U_1$ and the second actuation signal $U_2$, which depend both upon the first linearizing control signal $V_1$ and upon the second linearizing control signal $V_2$ and enable driving of the first actuator 7 and the second actuator 8 so as to produce variations of the pressure in combustion chamber P, substantially without varying the temperature in combustion chamber T, in response to variations of the first linearizing control signal $V_1$, and variations of the temperature in combustion chamber T, substantially without varying the pressure in combustion chamber P, in response to variations of the second linearizing control signal $V_2$. Furthermore, by the first actuation signal $U_1$ and the second actuation signal $U_2$, the linearizer-decoupler module 20 performs a further action of feedback linearization and imposes a linear pattern of the pressure in combustion chamber P and of the temperature in combustion chamber T. In particular, the first actuation signal $U_1$ and the second actuation signal $U_2$ are determined on the basis of the following relation:

$$[U_1 \ U_2]^T = G_a^{-1} ( [V_1 \ V_2]^T - F_a )$$

where $F_a$ and $G_a$ are the matrices that describe the dynamic system relative to the combustion chamber 15, expressed in canonical form ($G_a^{-1}$ being the inverse matrix of the matrix $G_a$), i.e.,

$$\frac{d}{dt} \begin{pmatrix} P'(t) \\ T'(t) \end{pmatrix} = \frac{1}{\tau} \left[ F_a(P, T) + G_a(P, T) \begin{pmatrix} U_1 \\ U_2 \end{pmatrix} \right]$$

The first actuation signal $U_1$ and the second actuation signal $U_2$ are then applied, respectively, to the first actuator 7 and to the second actuator 8 for controlling the combustion process within the combustion chamber 15.

The pressure transducer 3a and the temperature transducer 3b detect the pressure at output from the compressor 10 and the temperature of the gases at the exhaust of the turbine 15 and supply to the first observer module 21 and to the second observer module 22 the measured pressure $P_M$ and the measured temperature $T_M$, respectively.

As already mentioned previously, the first observer module 21 supplies the pressure estimate $P_E$ (relative to the compressor pressure $P_C$ at output from the compressor 10) and the pressure derivative estimate $P_E$' (relative to the derivative of the compressor pressure $P_C$), starting from the measured pressure $P_M$ and the first control signal $V_P$; and the second observer module 22 supplies the temperature estimate $T_E$ (relative to the exhaust temperature $T_{EX}$ of the exhaust gases of the turbine 15) and a temperature derivative estimate $T_E$' (relative to the derivative of the exhaust temperature $T_E$), starting from the measured temperature $T_M$ and the second control signal $V_T$. In the embodiment described herein, the first observer module 21 and the second observer module 22 are linear and distinct from and independent of one another. In particular, the first observer module 21 and the second observer module 22 may have the form of a known observer, for example a Kalman or Luenberger observer. This is possible because the entire system is decoupled and linearized as a result principally of the linearizer-decoupler module 20. The convergence of the first observer module 21 and of the second observer module 22 in turn renders effective the action of the linearizer-decoupler module 20, which can operate on the basis of correct estimates and, once the transients have expired, substantially without error.

Furthermore, the estimated quantities, in particular the estimated pressure $P_E$ and the estimated temperature

$T_E$, reflect the pattern of the compressor pressure $P_C$ and of the exhaust temperature $T_{EX}$, which are non-dynamically correlated (and hence equivalent from the standpoint of the control) to the pressure in combustion chamber P and to the temperature in combustion chamber T. Precise estimates of the pressure in combustion chamber P and of the temperature in combustion chamber T are thus available, since rapid variations thereof are not masked by the dynamics of the transducers.

The control of the plant 1 is hence more reliable, especially in the case of sudden variations in the operating conditions, as in the case of disconnection from the network for safety reasons or for the request, by the network, for particularly burdensome interventions of regulation. In particular, since the control device 5 is able to intervene promptly, the combustion chamber 13 is protected from transients with high temperatures that could damage it, and the triggering of phenomena (humming) that may cause instability of combustion is moreover prevented.

Another advantage deriving from the decoupling is the greater ease in executing the necessary calibrations, especially of the PID regulator included in the regulator module 17.

According to alternative embodiments (not illustrated), which may be exploited when the dynamics of the actuators or of some transducers are negligible with respect to the dynamics relative to the combustion chamber 13, at least one observer module is simplified and supplies the estimate of the pressure (or of the temperature) measured, without supplying the estimate of its derivative. The loop for regulating the pressure (respectively, the temperature) is thus based upon a dynamic system of the first order.

Finally, it is evident that modifications and variations can be made to the device and to the method described herein, without departing from the scope of the present invention, as defined in the annexed claims.

**Claims**

1.  A device for controlling a gas-turbine plant, comprising a regulator module (17), for controlling actuators (7, 8) of a turbogas unit (2) so as to limit internal quantities (P, T) of the turbogas unit (2); und estimator means (21, 22), connectable to transducers (3, 3a, 3b) of the turbogas unit (2) for receiving measured quantities ($P_M$, $T_M$) detectable by the transducers (3, 3a, 3b) and configured to supply to the regulator module (17), on the basis of the measured quantities ($P_M$, $T_M$), estimated quantities ($P_E$, $T_E$) indicative of measurably quantities ($P_C$, $T_{EX}$), non-dynamically correlated to the internal quantities (P, T) of the turbogas unit (2)
    **characterized by**
    a linearizer-decoupler module (20), co-operating with the regulator module (17) for separately regulating the internal quantities (P, T) of the turbogas unit (2).

2.  The device according to Claim 1, wherein the estimator means (21, 22) comprise at least one first linear observer (21), connectable to the transducers (3, 3a, 3b) of the turbogas unit (2) for receiving at least one respective first measured quantity ($P_M$) and configured to supply a respective first estimated quantity ($P_B$) to the regulator module (17).

3.  The device according to Claim 2, wherein the estimator means (21, 22) comprise at least one second linear observer (22), connectable to the transducers (3, 3a, 3b) of the turboqas unit (2) for receiving at least one respective second measured quantity ($T_M$) and configured to supply a respective second estimated quantity ($T_E$) to the regulator module (17).

4.  The device according to Claim 3, wherein the first linear observer (21) and the second linear observer (22) are configured to supply, respectively, a first estimate of derivative ($P_F'$) of the first estimated quantity ($P_E$) and a second estimate of derivative ($T_E'$) of the second estimated quantity ($T_E$).

5.  The device according to Claim 3 or Claim 4, wherein the first estimated quantity ($P_E$) is indicative of a compressor pressure ($P_E$), and the second estimated quantity ($T_E$) is indicative of a turbine-exhaust temperature ($T_{EX}$).

6.  The device according to any one of the preceding claims, wherein the linearizer-decoupler module (20) is configured to produce variations of a first internal quantity (P) of the turbogas unit (2), substantially without varying a second internal quantity (T) of the turbogas unit (2) in response to a first control signal ($V_F$) generated by the regulator module (17), and to produce variations of a second internal quantity (T) of the turbogas unit (2), substantially without varying the first internal quantity (P) of the turbogas unit (2) in response to a second control signal ($V_T$) generated by the regulator module (17).

7.  The device according to any one of the preceding claims, wherein the linearizer-decoupler module (20) is moreover configured to execute a feedback linearization on the turbogas unit (2).

8. The device according to claim 7, comprising a linearizer module (18), configured to execute a further feedback linearization on the turbogas unit (2).

9. A gas-turbine plant comprising a turbogas unit (2), transducers (3, 3a, 3b) coupled to the turbogas unit (2) for detecting measured quantities ($P_M$, $T_M$), and a control device (5) according to any one of the preceding claims.

**Patentansprüche**

1. Vorrichtung zum Steuern einer Gasturbinenanlage, umfassend ein Regelmodul (17) zum Steuern von Aktuatoren (7, 8) einer Gasturbineneinheit (2), um so interne Größen (P, T) der Gasturbineneinheit (2) zu begrenzen; und ein Abschätzmittel (21, 22), das mit Transducern (3, 3a, 3b) der Gasturbineneinheit (2) verbindbar ist zum Empfangen gemessener und von den Transducern (3, 3a, 3b) erfassbarer Größen ($P_M$, $T_M$), und das dafür ausgebildet ist, dem Regelmodul (17) auf Basis der gemessenen Größen ($P_M$, $T_M$) abgeschätzte Größen ($P_E$, $T_E$), die indikativ für die gemessenen Größen ($P_C$, $T_{EX}$) und nicht-dynamisch mit den internen Größen (P, T) der Gasturbineneinheit (2) korreliert sind, zuzuführen;
**gekennzeichnet durch** ein Linearisierungsentkopplermodul (20), das mit dem Regelmodul (17) zusammenwirkt zum getrennten Regeln der internen Größen (P, T) der Gasturbineneinheit (2).

2. Vorrichtung nach Anspruch 1, bei der das Abschätzmittel (21, 22) zumindest einen ersten linearen Beobachter (21) aufweist, der mit den Transducern (3, 3a, 3b) der Gasturbineneinheit (2) verbindbar ist, zum Empfangen von zumindest einer entsprechenden ersten gemessenen Größe ($P_M$), und der dafür ausgebildet ist, um eine entsprechende erste abgeschätzte Größe ($P_R$) dem Regelmodul (17) zuzuführen.

3. Vorrichtung nach Anspruch 2, bei der das Abschätzmittel (21, 22) zumindest einen zweiten linearen Beobachter (22) aufweist, der mit den Transducern (3, 3a, 3b) der Gasturbineneinheit (2) verbindbar ist, zum Empfangen von zumindest einer entsprechenden zweiten gemessenen Größe ($T_M$), und der dafür ausgebildet ist, eine entsprechende zweite abgeschätzte Größe ($T_E$) dem Regelmodul (17) zuzuführen.

4. Vorrichtung nach Anspruch 3, bei der der erste lineare Beobachter (21) und der zweite lineare Beobachter (22) dafür ausgebildet sind, um jeweils eine erste Abschätzung der Ableitung ($P_E$') der ersten abgeschätzten Größe ($P_E$) und eine zweite Abschätzung der Ableitung ($T_E$') der zweiten abgeschätzten Größe ($T_E$) zuzuführen.

5. Vorrichtung nach Anspruch 3 oder 4, bei der die erste abgeschätzte Größe ($P_E$) indikativ für einen Kompressordruck ($P_R$) und die zweite abgeschätzte Größe ($T_E$) indikativ für eine Turbinenabgastemperatur ($T_{EX}$) ist.

6. Vorrichtung nach einem der vorhergehenden Ansprüche, bei der das Linearisierungsentkopplermodul (20) dafür ausgebildet ist, Variationen einer ersten internen Größe (P) der Turbingaseinheit (2), ohne im Wesentlichen eine zweite interne Größe (T) der Gasturbineneinheit (2) zu variieren, in Antwort auf ein von dem Regelmodul (17) erzeugtes erstes Steuersignal ($V_F$) zu erzeugen, und Variationen einer zweiten internen Größe (T) der Gasturbineneinheit (2), ohne im Wesentlichen die erste interne Größe (P) der Gasturbineneinheit (2) zu variieren, in Antwort auf ein von dem Regelmodul (17) erzeugtes zweites Steuersignal ($V_T$) zu erzeugen.

7. Vorrichtung nach einem der vorhergehenden Ansprüche, bei der das Linearisierungsentkopplermodul (20) ferner dafür ausgebildet ist, eine Feedback-Linearisierung an der Gasturbineneinheit (2) auszuführen.

8. Vorrichtung nach Anspruch 7, umfassend ein Linearisierungsmodul (18), das dafür ausgebildet ist, eine weitere Feedback-Linearisierung an der Gasturbineneinheit (2) auszuführen.

9. Gasturbinenanlage, umfassend eine Gasturbineneinheit (2), Transducer (3, 3a, 3b), die mit der Gasturbineneinheit (2) gekoppelt sind zum Erfassen gemessener Größen ($P_M$, $T_M$), und eine Steuervorrichtung (5) gemäß einem der vorhergehenden Ansprüche.

**Revendications**

1. Dispositif pour contrôler une centrale à turbine à gaz, comprenant un module de régulateur (17) pour contrôler les actionneurs (7, 8) d'une unité de turbo-gaz (2) afin de limiter des grandeurs internes (P, T) de l'unité de turbo-gaz (12) ; et

   des moyens d'estimation (21, 22) pouvant être raccordés à des transducteurs (3, 3a, 3b) de l'unité de turbo-gaz (2) pour recevoir des grandeurs mesurées ($P_M$, $T_M$) détectables par les transducteurs (3, 3a, 3b) et configurés pour fournir au module de régulateur (17), en fonction des grandeurs mesurées ($P_M$, $T_M$), des grandeurs estimées ($P_E$, $T_E$) indicatives de grandeurs mesurables ($P_C$, $T_{EX}$), corrélées de manière non dynamique aux grandeurs internes (P, T) de l'unité de turbo-gaz (2), **caractérisé par** :

   un module de linéarisateur - découpleur (20) coopérant avec le module de régulateur (17) pour réguler séparément les grandeurs internes (P, T) de l'unité de turbo-gaz (2).

2. Dispositif selon la revendication 1, dans lequel les moyens d'estimation (21, 22) comprennent au moins un premier observateur linéaire (21) pouvant être raccordé aux transducteurs (3, 3a, 3b) de l'unité de turbo-gaz (2) afin de recevoir au moins une première grandeur mesurée ($P_M$) respective et configuré pour fournir une première grandeur estimée ($P_E$) correspondante au module de régulateur (17).

3. Dispositif selon la revendication 2, dans lequel les moyens d'estimation (21, 22) comprennent au moins un second observateur linéaire (22) pouvant être raccordé aux transducteurs (3, 3a, 3b) de l'unité de turbo-gaz (2) pour recevoir au moins une seconde grandeur mesurée ($T_M$) respective et configuré pour fournir une seconde grandeur estimée ($T_E$) correspondante au module de régulateur (17).

4. Dispositif selon la revendication 3, dans lequel le premier observateur linéaire (21) et le second observateur linéaire (22) sont configurés pour fournir, respectivement, une première estimation de dérivé ($P_{E'}$) de la première grandeur estimée ($P_E$) et une seconde estimation de dérivé ($T_{E'}$) de la seconde grandeur estimée ($T_E$).

5. Dispositif selon la revendication 3 ou la revendication 4, dans lequel la première grandeur estimée ($P_E$) est indicative d'une pression de compresseur ($P_C$) et la seconde grandeur estimée ($T_E$) est indicative d'une température d'échappement de turbine ($T_{EX}$).

6. Dispositif selon l'une quelconque des revendications précédentes, dans lequel le module de linéarisateur - découpleur (20) est configuré pour produire des variations d'une première grandeur interne (P) d'une unité de turbo-gaz (2), sensiblement sans modifier une seconde grandeur interne (T) de l'unité de turbo-gaz (2) en réponse à un premier signal de commande ($V_P$) généré par le module de régulateur (17) et pour produire des variations d'une seconde grandeur interne (T) de l'unité de turbo-gaz (2), sans modifier sensiblement la première grandeur interne (P) de l'unité de turbo-gaz (2) en réponse à un second signal de commande ($V_T$) généré par le module de régulateur (17).

7. Dispositif selon l'une quelconque des revendications précédentes, dans lequel le module de linéarisateur - découpleur (20) est, en outre configuré pour exécuter une linéarisation de rétroaction sur l'unité de turbo-gaz (2).

8. Dispositif selon la revendication 7, comprenant un module de linéarisateur (18), configuré pour réaliser une linéarisation de rétroaction supplémentaire sur l'unité de turbo-gaz (2).

9. Centrale à turbine à gaz comprenant une unité de turbo-gaz (2), des transducteurs (3, 3a, 3b) couplés à l'unité de turbo-gaz (2) pour détecter les grandeurs mesurées ($P_M$, $T_M$) et un dispositif de commande (5) selon l'une quelconque des revendications précédentes.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5857321 A
- EP 1420153 A